# EUROPEAN PATENT SPECIFICATION

(11) **EP 3 383 199 B1**
(45) Date of publication and mention of the grant of the patent: **25.12.2019**
(21) Application number: 16820339.6
(22) Date of filing: 25.11.2016
(51) Int. Cl.: A23L 11/00, A23L 11/30, A23L 23/10, A23N 12/08

(54) **METHOD FOR PREPARING A NATURAL INSTANT SOUP WITH LOW GLYCAEMIC INDEX**
VERFAHREN ZUR HERSTELLUNG EINER NATÜRLICHEN FERTIGSUPPE MIT NIEDRIGEM GLYKÄMISCHEM INDEX
DMÉTHODE POUR LA PRÉPRATION D'UNE SOUPE INSTANTANÉE NATURELLE À FAIBLE INDICE GLYCÉMIQUE

(30) Priority: 01.12.2015 TR 201515234
(43) Date of publication of application: 10.10.2018
(73) Proprietor: Tubitak, 06100 Ankara (TR)
(72) Inventor: ÖZTÜRK, Tarik, Gebze 41470 Kocaeli (TR); TOPAL, Bahar, Gebze 41470 Kocaeli (TR)
(86) International application number: PCT/IB2016/057131
(87) International publication number: WO 2017/093868

(56) References cited:
- WO-A1-96/41544
- N.N.: "Chapter 5: Traditional, Value-Added Applications of Dry Peas, Lentils & Chickpeas", , 22 February 2017 (2017-02-22), XP055348770, Retrieved from the Internet: URL:https://www.usapulses.org/core/files/u sapulses/uploads/files/Chapter5.pdf [retrieved on 2017-02-22] cited in the application

## Description

### 1. Technical field

The topic of this invention is the production method of a powder mixture which does not contain any food additive and can turn into a low glycaemic index consistent soup when mixed with hot water.

### 2. Background technique

There are lots of industrially made soups and instant soup mixtures in the market. These industrially made soups generally contain pre-dried or pre-cooked vegetables and legumes with starch based components that provides gelation and the flavour of these are improved either with monosodium glutamate or another flavour enhancers as yeast extract, hydrolysed vegetable protein. These kinds of soups have some certain disadvantages for the consumers. These soups need food additives for flavour, their preparation time can be long, their glycaemic indices are high, and they can flocculate with hot water.

Instant soups are developed to reduce the long cooking time of industrially made soups. In instant soups the components are cooked and grounded to small pieces and some consistency enhancers are added. These consistency enhancers have generally high glycaemic indices. Monosodium glumate, yeast extract, hydrolysed vegetable protein are needed for flavour enhancing of the soups.

The US pea and lentil council declared that the instant soups can be prepared by drying of the puree after boiling and mashing of the legumes.

In US005863592A the problems which were encountered in the previous method as not dissolving in water, forming irregular texture and flocculating were resolved by awaiting the legumes in water and cooking them in steam following their mashing and drying to form instant pea granules. The method that is declared in US005863592A recommends a solution for the production of a powder which dissolves easier than pea, however it does not mention a solution for flavour. Besides in US5863592A patent, the chickpeas are cooked, mashed and turned into powder by drying. The flour is not obtained from whole the chickpeas treated with a peculiar process.

In WO1996041544A1 patent document, a method for forming a dehydrated leguminous food product producing is disclosed. Said method comprising the steps of; providing uncooked and dried legumes; tempering the legumes for a first period of time; cooking the legumes in a steam environment for a period of time sufficient to soften the legumes; rolling the cooked legumes to produce flattened mass; dehydrating the flattened mass of cooked leguminous food product and breaking the dehydrated mass of food product to provide dehydrated flakes of a desired size. The resulting product in the said patent application is instantly reconstitutable pea soup. However, our method disclosed in claim 1 differs from the teaching of this document in the steps of; two different times tempering; at least one time roasting; no need for cooking of the chickpeas in low-pressure steam environment and preparation of chickpea flour by grinding rather than chickpea flakes prepared by roller mill.

In WO2007006383 A2 patent application, plants that are rich in starch are steeped in water and softened, their cells are released with various solutions and enzymes, after that they are percolated and dried. With this method low glycaemic indexed products can be obtained. However, there is no information about instant solubility properties and taste of these products. Besides in this patent the whole chickpeas are not dried but the puree or liquid that is obtained by shattering is dried.

US lentil and pea council recommends roasting of legume flours due to their positive contribution to flavour. Roasting process generally contributes the partial degradation of starch and addition of roasted legume flour into the floury products generally gives positive results. However also in this process the chickpeas are shattered into pieces and processed, the whole chickpeas are not grounded after a special process.

Roasted chickpea is a product that is produced with mastery in small scale rather than industrial scale. US lentil and pea council states that the physical and chemical processes occurring through the production of roasted chickpea from chickpea are not exactly known but the occurring processes have different effects of the cooking or roasting of the chickpeas. One of the most important indicators of these processes is the gain of lots of air gaps of the structure however normally the chickpeas don't have any air gaps.

The starch in chickpeas neither pre-gelatinizes due to boiling of the chickpeas, nor is roasted as in the roasting of chickpea flour. Roasted chickpeas are produced according to regions' peculiar procedures. However, in the basic chickpea production the chickpeas are classified according to their sizes, the classified chickpeas are steeped in water and assured to be swollen. Swollen chickpeas are tempered at 5-8 min at 100°C or 10-15 min at 70-80°C. After the tempering, chickpeas are rested in various durations but generally 30 days in burlap sacks or wood surfaces. After resting phase they are again steeped into water according to their region and treated either at 100°C 5-8 min or at 70-80°C 10-15 min again. After tempering roasted chickpeas are rested up to 60 days. After this phase roasted chickpeas can either be tempered and rested or can be roasted. Before the roasting process roasted chickpeas can be wetted according to their region. Roasting process is executed at 6-7 min 100-150°C after a preheat treatment at 50-60°C. The outer shells of the roasted chickpeas are removed with a utensil called mafrak.

The process that is subjected to patent is soaking of the chickpeas at least once, tempered twice in different times, and roasting at least once prior to turning into flour. It is known for years that chickpeas that are processed like roasted chickpeas have low glycaemic indices. Roasted chickpea flour has found versatile usage areas. These usage areas are using of it as a snack by mixing it with powdered sugar for children, halvah formed by roasting, filling material for adulteration purpose and addition of it into cakes. Also flour obtained by grinding roasted chickpeas which are roasted for a second time is used to make soup by searing with butter and boiling after addition of cold water and meat broth as known from other floury soups.

### 3. Technical problem that the invention aimed to solve

The chickpeas that are used in this soup are at least once wetted, tempered twice at different times, and roasted at least once prior to turned into flour. In the depicted soup, unlike the roasted chickpeas in the roasted chickpea flour, roasted chickpeas which are extra roasted are used. Roasted chickpeas are ground and roasted with butter and then boiled with cold water. However, in this patent flour is not roasted and not cooked with the addition of cold water. In this patent 85-100°C water is added to flour and savour mixture and a consistent product is obtained. By this method butter and roasted flour do not turn into a more degraded form and the addition of hot water is possible. Due to adding hot water instead of cold water, cooking process is not needed, and the phase separation due to cold water addition is not observed. This process also solves the constant stir up problem in order to inhibit the phase separation during cooking process.

It is not possible to obtain soup by addition of hot water to starch rich products as starch is not treated by the described process which is declared in this patent due to clumping of starch. For this reason, products that are rich in starch are added to hot meals by mixing with cold liquids or they are made to boil with cold water as is given in this recipe.

The most substantial characteristics of this flour obtained by this process is ability to form texture without clumping by the addition of hot water but absorbing cold water in limited amounts causing phase separation.

Besides, a patent about extruded product process was encountered after dough production from roasted chickpea flour.

However, the usage of roasted chickpea as an instant thickener or an instant soup was not encountered.

Any patent describing not only roasted chickpea but also chickpea in which they are wetted at least once, tempered twice in different times, and at least roasted once was not encountered.

### 4. Disclosure of invention

The invention covers steps below.
1) Wetting and letting chickpeas swell if they are dry
2) Tempering wetted or fresh chickpeas for 1-60 minutes at 50-150°C
3) Resting tempered chickpeas between 1-100 days
4) Wetting rested chickpeas and tempering them for 1-60 minutes at 50-150°C
5) Resting tempered chickpeas between 1-100 days
6) Roasting tempered chickpeas for 1-60 minutes at 80-300°C
7) Removing chickpea skin by a utensil called mafrak during or after roasting
8) Grinding chickpea or broken chickpea ***by a roller, bladed, bead, or another mill***
9) Addition of one or a mixture of some substances among milk powder, whey powder, yoghurt powder, cheese powder, dried fruits or vegetables, spices, savour such as salt or sugar to the obtained chickpea powder
10)Consumption of this mixture by the addition of a liquid at 85-100°C

Chickpeas can be sorted according to their size prior the operation at the first step to obtain a more homogeneous product and they absorb water and are tempered at the same time for ease of the process.

The wetting step is applied to dried chickpeas but the wetting of fresh chickpeas or addition of any acidity regulator, any salt, enzyme or savour is not out of the scope of this patent. At this step, chickpeas are wetted with water between 0-100°C and water absorption between 10% to 500% of their weight is provided.

Although chickpeas are tempered at the second step preferably at 100°C for 5-8 minutes or at 70-80°C for 10-15 minutes, tempering chickpeas at 50-150°C for 1-60 minutes is also in the scope of this patent.

Although chickpeas are rested preferably on wood surfaces or burlap sacks at the third step, resting chickpeas between 0-60°C in any container or surface where moisture or gas composition are controlled is not out of the scope of this patent. Although the resting time is between 1-100 days, resting operations shorter than 1 day or longer than 100 days are not out of the topic of this invention.

At the fourth step, re-wetting and not re-wetting of rested chick peas are covered. Although chickpeas are preferably tempered at 100°C for 5-8 minutes or at 70-80°C for 10-15 minutes, their tempering at 50-150°C for 1-60 minutes is also in the scope of this patent.

Although chickpeas are rested preferably on wood surfaces or burlap sacks at the fifth step, resting chickpeas between 0-60°C in any container or surface where moisture or gas composition are controlled is not out of the scope of this patent. Although the resting time is between 1-100 days, resting operations shorter than 1 day or longer than 100 days are not out of the topic of this invention.

Although chickpeas are preferably roasted at 100-150°C for 6-7 minutes after a pre heating step at 50-60°C at the sixth step, roasting operations at different time and temperature are also in the scope of this patent.

Although skin separation is done by a utensil called mafrak at the seventh step, other processes where the skin is removed from chickpea by other methods are also in the scope. The chickpea skin can be separated from ground chickpea by sieving, separation by air or a cyclone according to its density. Besides grinding of the chickpeas into flour, any other process as sieving of the powder product can be done. Chickpeas have to be ground at the eighth step so that they pass through a sieve of minimum 355 micrometer (µm) (micron). If all particles are not ground after milling operation at step 8 the chickpea powder can be sieved through a 350 micrometer sieve. However, if it the presence of low thickening particles in soup does not cause a problem, the amount of chickpea can be increased to adjust the amount of particle concentration under 350 micrometer with thickening properties.

At the ninth step, addition of one or a mixture of some substances among milk powder, whey powder, yoghurt powder, cheese powder, dried fruits or vegetable, spices, savour substances such as salt or sugar, aroma and fat to obtained chickpea powder is described. However, the addition of none of the additional substances to this mixture is also in the scope of this patent. Although this patent is related to an additive free instant soup, the addition of any additive to this mixture is covered by this patent.

The addition of vitamin, mineral or other substances beneficial for human health to this mixture at any step or specializing products to special consumer groups by supplementation or specially formulating the mixture for defined age or nutrition groups by increasing specific nutritive compounds and additions made is in the scope of this patent.

At the twelfth step, the mixture is preferably packaged. However, not being packaged is not out of the scope of the patent. The packaging is any natural product or polymer. The packaging with vacuum or modified atmosphere is in the scope of patent.

The thirteenth step will be performed by the consumer and is making the product ready to consume by addition of a water containing liquid at 85-100°C.

The additional wetting tempering and roasting steps that will be used by the production of processed chickpea are in the scope of this patent. Obtaining a thickened liquid with no visible phase separation by the addition of water above 80°C to the powdered product obtained by the application of at least one wetting two tempering and one roasting operation for any time on crushed chickpeas with a particle size greater than 1 mm is covered by this patent.

### 5. The application manner of the Invention to industry

All food processing equipments that are utilized by applying the invention to industry are available on the market. The processes described in this patent can easily be applied to the industry.

## Claims

1. A method for texturizing instant soup by using Chickpea flour, wherein the chickpeas have undergone at least one time wetting, two different times tempering and at least one time roasting processes before grinding chickpeas to get chickpea flour comprising the following steps:
a. Wetting and letting chickpeas swell if they are dry
b. Tempering wetted or fresh chickpeas for 1-60 minutes at 50-150° C
c. Resting tempered chickpeas between 1-100 days
d. Wetting rested chickpeas and tempering them for 1-60 minutes at 50-150° C
e. Resting tempered chickpeas between 1-100 days
f. Roasting tempered chickpeas for 1-60 minutes at 80-300°C
g. Removing chickpea skin by an equipment called mafrak during or after roasting
h. Grinding chickpeas or crushed chickpeas
and texturizing of soup is achieved by the steps below
i. Addition of one or a mixture of some substances among milk powder, whey powder, yoghurt powder, cheese powder, dried fruits or vegetable, spices, flavouring substances such as salt or sugar to the obtained chickpea powder.
j. Consumption of the mixture by adding liquid at 85-100°C.

2. A method according to claim 1 wherein, chickpeas are grinded by a roller, bladed, bead, or other mill at step h.

3. A method according to claim 1 wherein, the method has a further step where grinded chickpeas are sieved by a 350 micrometer (µm) (micron) sieve after step h.

4. A method according to claim 1 wherein the method has a further step where skins are separated from chickpeas by cyclone or air flow, depending on their density.

5. A method according to claim 1 wherein, the method has a further step where skins are separated from chickpea by sieving.

6. A method according to claim 1 wherein vitamin, mineral or other substances beneficial for human health is added to the mixture at any step of texturizing the instant soup.

7. A method according to claim 1 wherein the mixture is specially formulated for specific age or nutritional groups.

## Patentansprüche

1. Das Verfahren zum Texturieren von Fertigsuppen unter Verwendung von Kichererbsenpulver; Wobei die Kichererbsen, vor dem Mahlen Kichererbsen für die Herstellung von Kichererbsenpulver, folgenden Schritten unterzogen werden, sie werden mindestens einmal eingeweicht, zweimal zu unterschiedlichen Zeiten erhitzt und mindestens einmal geröstet:
a. Einweichen und Aufquellen der Kichererbsen, wenn sie trocken sind
b. Erhitzen eingeweichter oder frischer Kichererbsen für 1-60 Minuten bei einer Temperatur von 50-150 ° C
c. Ausruhen der erhitzten Kichererbsen für 1-100 Tage
d. Einweichen der ausgeruhten Kichererbsen und Erhitzen für 1-60 Minuten bei einer Temperatur von 50-150°C
e. Ausruhen der erhitzten Kichererbsen für 1-100 Tage
f. Erhitzte Kichererbsen für 1-60 Minuten bei einer Temperatur von 80 bis 300 ° C rösten
g. Entfernen der Kichererbsenhülsen während oder nach dem Rösten mit einem "Mafrak" genannten speziellen Hilfsgerät
h. Mahlen der Kichererbsen oder der zerkleinerten Kichererbsen
Das Texturieren der Suppe erfolgt nach den folgenden Schritten:
i. Die Zugabe eines oder mehrerer dieser Substanzen wie Milchpulver, Molkepulver, Joghurtpulver, Käsepulver, getrocknetes Obst bzw. Gemüse, Gewürze, Geschmacksstoffe wie Salz oder Zucker zum erhaltenen Kichererbsenpulver.
j. Verbrauch dieser Mischung durch Zugabe von Flüssigkeit bei 85-100 ° C.

2. Ein Verfahren gemäß Anspruch 1, wobei die Kichererbsen nach Schritt h mit einer Walze, einem Messer, einer Perle oder einer anderen Mühle gemahlen werden.

3. Ein Verfahren gemäß Anspruch 1, wobei die gemahlenen Kichererbsen nach Schritt h mit einem weiteren Schritt durch ein 350 Mikrometer-Sieb (µm) (mikron) gesiebt werden.

4. Ein Verfahren gemäß Anspruch 1, wobei aufgrund eines weiteren Schritts im Verfahren, die Hülsen der Kichererbsen je nach ihrer Dichte durch einen Zyklon oder einen Luftstrom entfernt werden.

5. Ein Verfahren gemäß Anspruch 1, wobei aufgrund eines weiteren Schritts im Verfahren, die Hülsen der Kichererbsen mit Hilfe eines Siebs entfernt werden.

6. Ein Verfahren gemäß Anspruch 1, wobei der Mischung bei jedem Schritt des Texturierens der Fertigsuppe Vitamine, Mineralien oder für die menschliche Gesundheit vorteilhafte weitere Zusätze zugegeben werden.

7. Ein Verfahren gemäß Anspruch 1, wobei die Mischung spezifisch für ein bestimmtes Alter oder eine bestimmte Ernährungsgruppe zusammengestellt wird.

## Revendications

1. Procédé de texturation de soupe instantanée utilisant de la farine de pois chiches, dans lequel les pois chiches ont subi au moins une opération de mouillage, deux opérations de trempe différentes et au moins une opération de torréfaction avant la mouture de pois chiches pour obtenir de la farine de pois chiches comprenant les étapes suivantes:
a. Mouiller et laisser les pois chiches gonfler s'ils sont secs
b. Tempérez les pois chiches mouillés ou frais pendant 1-60 minutes à 50-150 °C
c. Reposez les pois chiches trempés entre 1 et 100 jours
d. Mouillez les pois chiches au repos et les tempérez pendant 1 à 60 minutes à 50-150 ° C
e. Reposez les pois chiches trempés entre 1 et 100 jours
f. Rôtissez les pois chiches trempés pendant 1 à 60 minutes à 80-300 C
g. Enlevez la peau de pois chiche avec un équipement appelé mafrak pendant ou après le rôtissage
h. Broyez des pois chiches ou des pois chiches écrasés
et la texturation de la soupe est obtenue par les étapes ci-dessous
i. Ajout d'une substance ou d'un mélange de certaines substances parmi le lait en poudre, le lactosérum en poudre, la poudre de yaourt, le fromage en poudre, les fruits ou légumes secs, les épices, les substances aromatisantes telles que le sel ou le sucre à la poudre de pois chiche obtenue.
j. Consommation du mélange en ajoutant du liquide à 85-100 ° C.

2. Procédé selon la revendication 1, dans lequel les pois chiches sont broyés par à d'un rouleau, d'une lame, d'une perle ou d'un autre moulin à l'étape h.

3. Procédé selon la revendication 1, dans lequel le procédé comporte une étape supplémentaire dans laquelle les pois chiches broyés sont tamisés par un tamis de 350 microns après l'étape h.

4. Procédé selon la revendication 1, dans lequel le procédé comporte une étape supplémentaire dans laquelle les peaux sont séparées des pois chiches par un cyclone ou un courant d'air, en fonction de leur densité.

5. Procédé selon la revendication 1, dans lequel le procédé comporte une étape supplémentaire dans laquelle les peaux sont séparées du pois chiche par tamisage.

6. Procédé selon la revendication 1, dans lequel des vitamines, des minéraux ou d'autres substances bénéfiques pour la santé humaine sont ajoutées au mélange à n'importe quelle étape de la texturation de la soupe instantanée.

7. Procédé selon la revendication 1, dans lequel le mélange est spécifiquement formulé pour des groupes d'âge ou de nutrition spécifiques.
